# FASCICULE DE BREVET EUROPEEN

(11) **EP 0 816 135 B1**
(45) Date de publication et mention de la délivrance du brevet: **14.02.2001**
(21) Numéro de dépôt: 97109753.0
(22) Date de dépôt: 16.06.1997
(51) Int. Cl.: B60C 23/00

(54) **Ensemble moyeu et prote-moyeu pour véhicule équipé d'un système de gonflage centralisé**
Achsen-Einheit für Fahrzeuge mit einer zentralen Reifenfülleinrichtung
Hub and axle assembly for vehicles with a central tyre inflation system

(30) Priorité: 25.06.1996 FR 9608043
(43) Date de publication de la demande: 07.01.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Chamoy, François, 63400 Chamalieres (FR)
(74) Mandataire: Dequire, Philippe Jean-Marie Denis

(56) Documents cités:
- EP-A- 0 656 267
- BE-A- 492 900
- DE-C- 611 082

## Description

La présente invention a pour objet un ensemble moyeu et porte-moyeu de véhicules équipés d'un système de gonflage centralisé et plus particulièrement les moyens d'étanchéité ou joints tournants entre les moyeux et porte-moyeux de ces véhicules.

Pour pouvoir utiliser une installation de gonflage embarquée à bord d'un véhicule pendant le roulage de ce dernier, il est nécessaire d'équiper chaque roue d'un joint tournant étanche pour assurer la liaison entre le compresseur d'air embarqué et chacun des pneumatiques, à travers le moyeu de chaque roue.

De tels joints tournants sont décrits, par exemple, dans le brevet US 4 730 656. Dans ce brevet, une lèvre souple d'étanchéité 72 est serrée en permanence contre sa portée cylindrique 68 par "un ressort circulaire 78 qui exerce une force radiale vers l'intérieur". En conséquence, dans ce système connu, les parties souples assurant l'étanchéité sont toujours en contact tournant. Cette disposition présente plusieurs inconvénients : une certaine puissance est absorbée inutilement, ce qui provoque un dégagement de chaleur nuisible ; d'autre part, les parties en contact tournant s'usent rapidement, ce qui nuit à leur fiabilité et nécessite leur remplacement.

Le brevet US 4 804 027 propose un dispositif pour résoudre ce problème. Dans ce second brevet, un lobe toroïdal 50 en caoutchouc, solidaire du moyeu fixe, s'appuie sur une portée cylindrique 22 du moyeu mobile : lorsque la pression d'air est élevée (pendant le gonflage), le lobe appuie fortement sur sa portée, de manière à assurer l'étanchéité ; lorsque l'on revient à la pression atmosphérique, "les lobes 50 appuient contre les surfaces 22 avec une pression très légère, voire sans pression de contact du tout". Ce dispositif permet de réduire de façon significative les pressions de contact entre les lèvres d'étanchéité et les portées correspondantes, pendant les périodes de non utilisation des moyens de gonflage. Cependant, ce dispositif ne permet pas d'utiliser de matériaux rigides pour assurer l'étanchéité. En effet, l'étanchéité est assurée par la déformation radiale d'un lobe élastique. En conséquence, ce lobe et le dispositif associé présentent toujours des problèmes d'usure et donc d'endurance.

Dans ce qui suit, on appellera "moyeu" l'ensemble des pièces mobiles en rotation autour du porte-moyeu fixe d'un essieu de véhicule à l'exception des pneumatiques et des roulements à billes de liaison. Ainsi, le terme "moyeu" englobera le moyeu proprement dit mais aussi la roue, rigidement fixée au moyeu.

De même, on appellera "porte-moyeu" l'ensemble des pièces fixes de l'essieu.

La présente invention a donc pour but d'offrir un ensemble moyeu, porte-moyeu et leurs moyens d'étanchéité associés, dans lequel ces moyens d'étanchéité ne sont en contact tournant que pendant les courtes périodes de gonflage des pneumatiques et ne présentent pas ces problèmes d'endurance.

L'invention concerne un ensemble de deux organes, moyeu et porte-moyeu liés en rotation par un roulement, pour véhicule équipé d'un système de gonflage centralisé avec une source d'air pressurisé, tel que :
- le porte-moyeu, fixe relativement au véhicule, comprend un premier conduit d'air avec une première entrée connectable pneumatiquement à la source d'air pressurisé et une première sortie ;
- le moyeu, mobile en rotation autour du porte-moyeu, comprend un second conduit d'air avec une seconde entrée et une seconde sortie connectable pneumatiquement à la cavité interne d'un pneumatique fixé audit moyeu ;
- les première sortie et seconde entrée débouchent dans une chambre entre les organes fixe et mobile ;
- ladite chambre est reliée à l'air libre par au moins un passage entre une première portée annulaire d'étanchéité lisse solidaire de l'un desdits organes et une seconde portée annulaire d'étanchéité lisse correspondante ménagée sur une bague rigide portée par une membrane annulaire solidaire de l'autre organe et définissant une paroi déformable de ladite chambre de manière à permettre un déplacement sensiblement axial de ladite bague entre deux positions :
   a) une position normale d'ouverture du passage d'air dans laquelle les portées d'étanchéité sont espacées l'une de l'autre, et
   b) une position de fermeture dans laquelle les première et deuxième portées sont en contact tournant étanche l'une avec l'autre, et
- ladite chambre comprend un canal annulaire de fuite de faible section droite relativement à la section droite du premier conduit de telle sorte qu'une connexion du premier conduit à la source d'air pressurisé entraîne une surpression dans ladite chambre et la résultante des efforts s'appliquant sur les parois de la membrane annulaire sollicite la bague vers sa position de fermeture.

En conséquence l'étanchéité des conduits d'air à travers le porte-moyeu et le moyeu n'est assurée que lors du gonflage du pneumatique correspondant. Cela garantit des pertes d'énergie de frottement réduites au minimum. De plus, les bagues sont rigides, elles peuvent ainsi être ou comprendre des éléments réalisés en des matériaux spécialement mis au point pour avoir un faible coefficient de frottement, un fonctionnement à sec et une excellente résistance à l'usure et à l'échauffement, tel du carbone. L'endurance de ces pièces et donc des moyens d'étanchéité est donc elle aussi excellente.

La présence du canal de fuite de faible section droite relativement à la section droite du conduit d'alimentation en air comprimé permet de garantir simplement l'établissement d'une différence de pression suffisante entre les deux cotés des membranes annulaires pour assurer le déplacement axial des bagues et des portées d'étanchéité et ainsi créer l'étanchéité de la chambre. Cette solution est particulièrement simple. De préférence, ce canal de fuite est disposé de façon axiale, il a ainsi l'avantage d'avoir une section droite constante quelles que soient les positions respectives des portées d'étanchéité.

De préférence, la membrane annulaire des moyens d'étanchéité est réalisée en caoutchouc.

Dans une variante de l'invention, les moyens d'étanchéité comprennent deux membranes annulaires et deux bagues.

Enfin, avantageusement, les portées correspondantes sont orientées radialement.

On va décrire des exemples de mise en oeuvre de l'invention dans le cas d'un véhicule de tourisme, donnés à titre non limitatif, en se référant au dessin annexé sur lequel :
- la figure 1 est une vue schématique d'un véhicule équipé d'une installation de gonflage centralisé ;
- la figure 2 est une vue en coupe d'un premier ensemble moyeu non moteur et porte-moyeu selon l'invention, le système de gonflage étant au repos ;
- la figure 3 est un agrandissement de la figure 2, le système de gonflage étant en fonctionnement ;
- la figure 4 est une vue en coupe d'un second ensemble moyeu moteur et porte-moyeu selon l'invention, le système de gonflage étant au repos ;
- la figure 5 est un agrandissement de la figure 4.

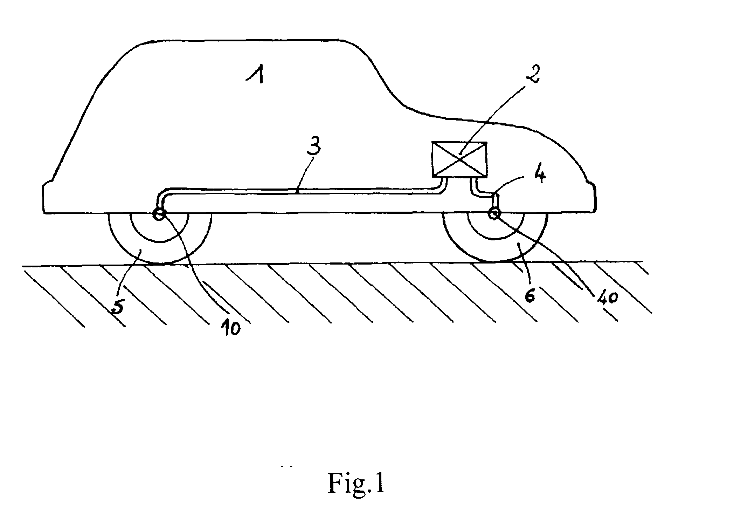

On voit sur la figure 1 un véhicule 1 comportant une installation de gonflage centralisé embarquée : cette installation comprend un compresseur d'air 2 électrique ou entraîné par le moteur (non représenté), et des canalisations telles que 3 et 4 permettant d'envoyer de l'air sous pression dans les pneumatiques 5 et 6 à travers les ensembles moyeux et porte-moyeux 10 ou 40, comme on va l'expliquer ci-après. Bien entendu, le nombre de pneumatiques raccordés correspond au nombre de roues du véhicule équipé conformément à l'invention.

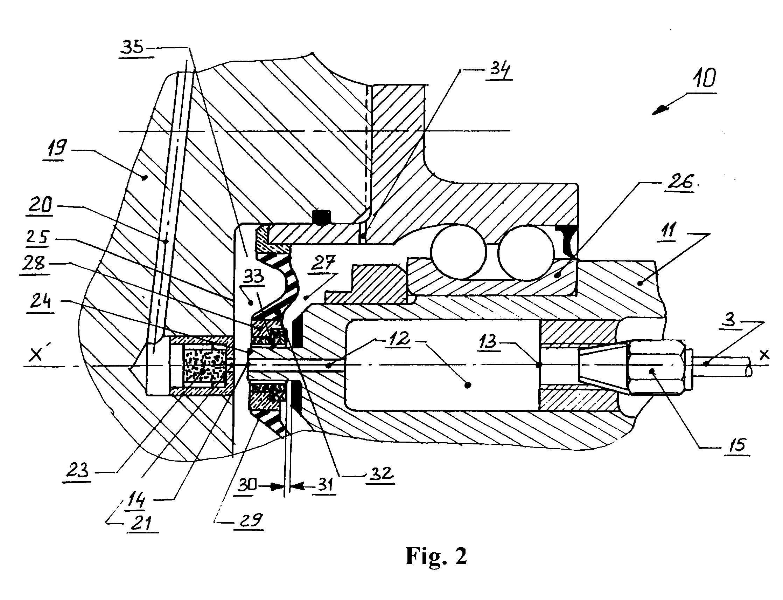

La figure 2 présente une coupe d'un premier ensemble 10 moyeu non moteur et porte-moyeu selon l'invention correspondant à un essieu porteur d'un véhicule. Le porte-moyeu 11, fixe, est percé selon son axe XX' pour accueillir une connexion pneumatique rapide 15 reliée à la canalisation d'air 3 conduisant à la source 2 et réaliser un conduit d'air 12 avec une première entrée 13 et une première sortie 14. Le moyeu 19 est lié en rotation au porte-moyeu 11 par un roulement à bille standard 26. Le moyeu 19 comprend un conduit d'air 20 avec une seconde entrée 21 et une seconde sortie (non représentée) débouchant dans la cavité interne du pneumatique 5. La seconde entrée 21 est disposée en regard de la première sortie 14 du conduit d'air 12 et comprend un clapet anti-retour non taré 23 qui garantit le non dégonflement du pneumatique 5 lorsque la canalisation 3 n'est pas connectée pneumatiquement avec la source d'air comprimé 2.

La paroi 24 du porte-moyeu 11 à proximité de la première sortie 14 définit avec la paroi 25 du moyeu 19 disposée à proximité de la seconde entrée 21 et le roulement 26 une cavité 27 qui n'est pas étanche en raison de la présence d'un canal de mise à l'air libre 34 au travers duquel l'air peut s'échapper.

Pour rendre étanche la liaison pneumatique entre la première sortie 14 et la seconde entrée 21, les moyens d'étanchéité suivants sont disposés. Ces moyens comprennent une bague 28, annulaire, rigide, avec un disque d'étanchéité 29 réalisé de préférence en carbone. Le disque d'étanchéité a une première portée 30 disposée radialement pour pouvoir s'appuyer contre une seconde portée 31 correspondante, rapportée en bout du porte-moyeu 11. De préférence, cette seconde portée 31 est très dure et rectifiée. Cette seconde portée 31 est ici constituée d'un anneau en céramique. La bague 28 est fixée de façon étanche à une membrane annulaire 32 elle même fixée de façon étanche à la paroi 25 du moyeu 19. La membrane annulaire 32 est réalisée de préférence en caoutchouc souple. Le disque d'étanchéité 29 a un diamètre intérieur légèrement supérieur au diamètre extérieur de l'extrémité axiale du porte-moyeu 11 pour qu'il n'y ait pas de frottement entre eux, tout en laissant un canal annulaire de fuite 35 de faible section droite relativement à la section droite minimale du conduit 12. Avantageusement, le canal annulaire de fuite 35 est une couronne dont le jeu est compris entre 0,2 et 0,5 mm. En tout état de cause, la section droite de ce canal annulaire de fuite 35 est au plus égale à 75 % de la section droite minimale du conduit 12.

Comme il a été dit, les portées 30, 31 correspondantes du disque d'étanchéité 29 et du porte-moyeu 11 sont de préférence d'orientation radiale. Elles peuvent aussi être tronconiques. En revanche, le mouvement principal de déplacement de la bague 28 est toujours un mouvement axial tout en admettant un mouvement angulaire pour accommoder les jeux fonctionnels du moyeu.

Dans la cavité 27, la membrane annulaire 32 définit ainsi avec la paroi 24 du porte-moyeu 11 disposée à proximité de la première sortie 14 et avec la paroi 25 du moyeu disposée à proximité de la seconde entrée 21 une chambre pneumatique 33.

Le dispositif fonctionne comme suit. Lorsque la canalisation 3 n'est pas pneumatiquement reliée à la source d'air 2, l'air compris dans cette canalisation 3, le conduit 12 et la chambre 33 est à la pression atmosphérique compte tenu de l'écartement des portées 30 et 31 et de la fuite d'air existante à travers le canal de mise à l'air libre 34. En revanche, l'air ne peut pas s'échapper du conduit 20 du moyeu 19 en raison de la présence du clapet anti-retour non taré 23. Dans cet état, les première 30 et seconde 31 portées correspondantes du disque d'étanchéité 29 et du moyeu 11 sont séparées d'une distance axiale comprise entre ε et quelques millimètres, de préférence de l'ordre de 1 mm. Cela garantit qu'il n'y ait aucun frottement entre elles donc ni usure, ni pertes d'énergies.

Lorsque la canalisation 3 est pneumatiquement reliée à la source d'air pressurisé régulé 2, la pression d'air à l'intérieur de la canalisation 3, du conduit 12 et de la chambre 33 augmente à cause de la faible section droite du canal de fuite 35 entre le diamètre intérieur du disque d'étanchéité 29 et le diamètre extérieur de l'extrémité axiale du porte-moyeu 11 relativement à la section droite minimale du conduit 12. Une différence de pression s'établit ainsi entre les deux côtés de la membrane annulaire 32 et la résultante des efforts qui s'établissent sur la membrane va déplacer axialement cette membrane 32 ainsi que la bague 28 vers le porte-moyeu 11, jusqu'à plaquer la première portée 30 contre la seconde portée 31 en céramique correspondante du porte-moyeu 11 et ainsi assurer une excellente étanchéité de la chambre 33.

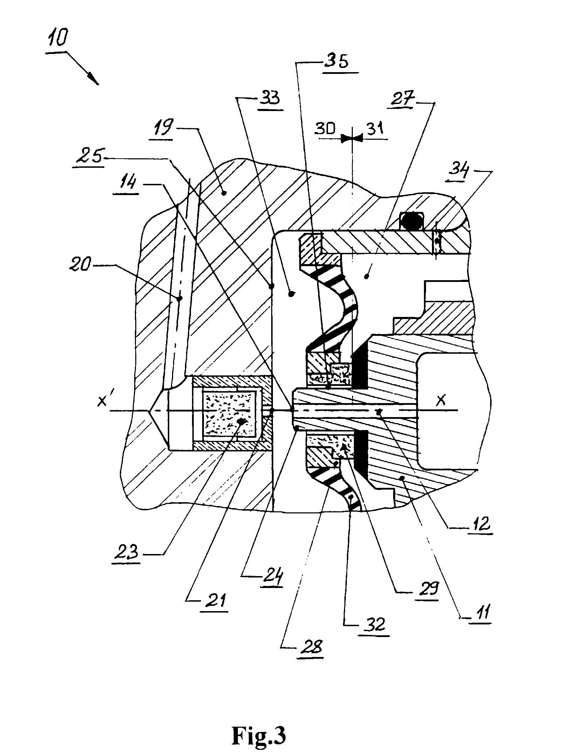

La figure 3 présente en coupe un agrandissement de la figure 2 lorsque le système de gonflage est en fonctionnement. Cette figure montre le contact des première 30 et seconde portées 31 qui assure l'étanchéité pneumatique de la chambre 33, ainsi que le clapet anti-retour non taré 23 en position ouverte lorsque la pression dans le conduit 20 est inférieure à la pression de la source d'air pressurisé.

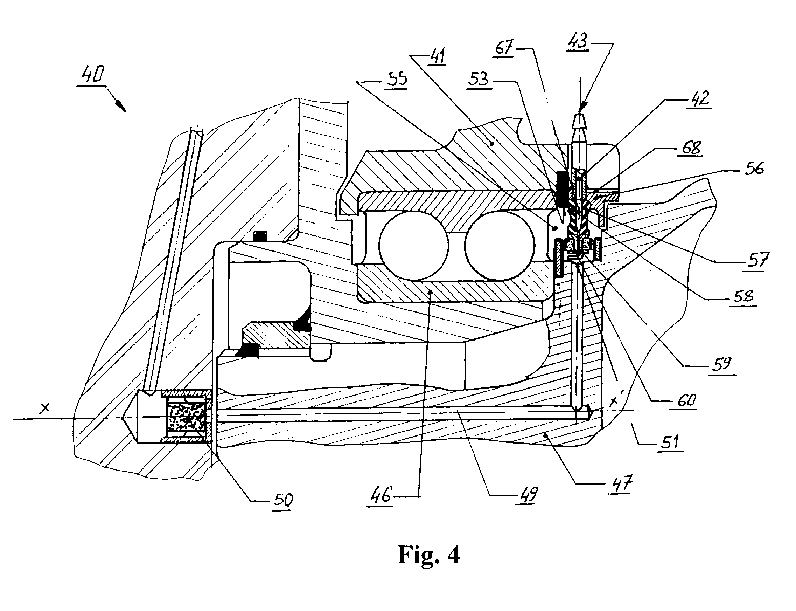

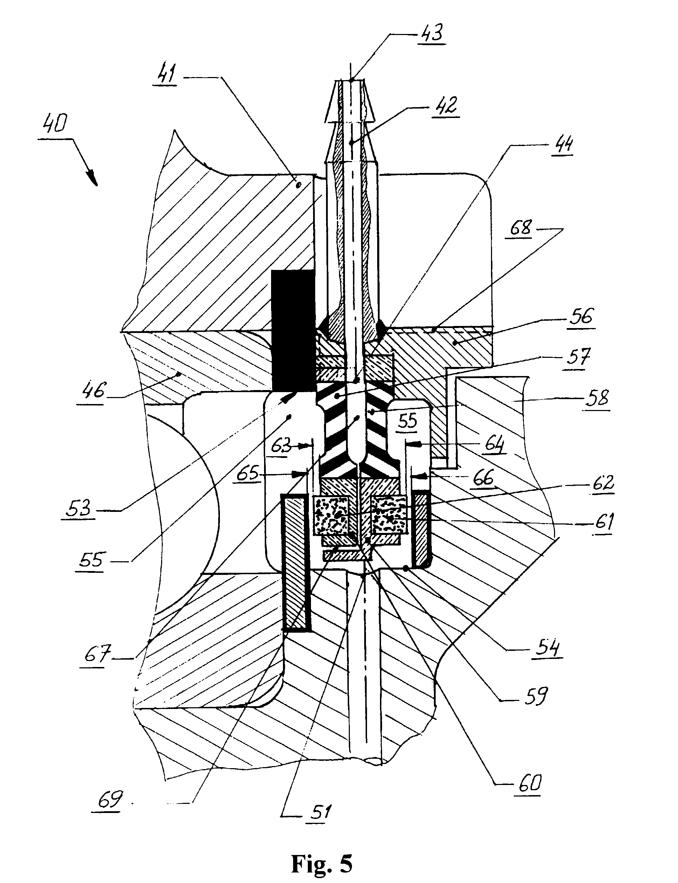

Les figures 4 et 5 présentent en coupe un second ensemble moyeu et porte-moyeu 40 selon l'invention correspondant particulièrement à un essieu moteur d'un véhicule. On voit le porte-moyeu 41, fixe, traversé par un conduit d'air 42 avec une première entrée 43 et une première sortie 44. Dans ce mode de réalisation, le conduit d'air 42 est solidaire des moyens d'étanchéité de l'ensemble 40. Comme précédemment le conduit d'air 42 peut être pneumatiquement relié à la source d'air pressurisé 2 par l'intermédiaire de la canalisation 4. Cet ensemble est lié en rotation autour de l'axe XX' par le roulement standard 46.

Le moyeu 47 est traversé par un conduit d'air 49 avec une seconde entrée 51 disposée en regard de la première sortie 44, et une seconde sortie (non représentée) débouchant dans la cavité interne du pneumatique 6. Le conduit 49 comporte un clapet anti-retour non taré 50.

Les parois 53 du porte-moyeu 41, à proximité de la première sortie 44, et 54 du moyeu 47, à proximité de la seconde entrée 51, définissent une cavité 55. Cette cavité annulaire présente deux ouvertures à l'air libre, la première à travers un canal de mise à l'air libre 68 disposé à côté du roulement à bille 46 et la seconde largement ouverte du côté intérieur du véhicule. Une bague annulaire 56 de centrage obture la plus grande partie de cette seconde ouverture ce qui permet aussi d'éviter que des poussières ou autres corps étrangers ne s'introduisent dans cette cavité 55. D'autre part, les moyens d'étanchéité suivants sont mis en place dans la cavité 55.

Ces moyens d'étanchéité sont doubles en raison des deux ouvertures précédentes. Ils comprennent (figure 5) deux membranes annulaires souples 57 et 58, et deux bagues 59 et 60 annulaires et rigides. Les membranes annulaires 57 et 58 sont fixées, de façon étanche, d'une part à la pièce annulaire 56 de centrage et d'autre part aux deux bagues 59 et 60. Les membranes annulaires 57, 58, sont réalisées en caoutchouc souple et autorisent des déplacements axiaux et angulaires des bagues 59 et 60. Les bagues annulaires comprennent comme précédemment des disques d'étanchéité 61, 62 avec des premières portées 63, 64, radiales réalisées en carbone pour avoir une excellente résistance à l'usure et un très faible coefficient de frottement. Ces premières portées 63, 64 sont disposées axialement en regard de secondes portées correspondantes 65, 66 rapportées sur la paroi 54 du moyeu 47. Les secondes portées 65 et 66 font partie d'appuis en céramique rapportés sur le moyeu 47.

Les deux membranes annulaires 57, 58 définissent avec la parois 54 du côté de la seconde entrée une chambre pneumatique 67.

Les bagues annulaires 59 et 60 s'emboîtent l'une dans l'autre pour constituer un canal annulaire de fuite 69 disposé axialement entre elles. Le jeu de ce canal annulaire est tel que la section droite de ce canal de fuite 69 est au plus égal à 75 % de la section droite du canal d'arrivée d'air 42. Ce canal 69 est disposé axialement pour que sa section droite soit sensiblement constante quelles que soient les positions respectives des deux membranes souples 57 et 58 de la chambre pneumatique 67. Cela assure un fonctionnement sûr du dispositif.

Lorsque la première entrée est connectée pneumatiquement à la source d'air comprimé, la pression de l'air dans, notamment, la chambre 67 augmente et plaque contre les secondes portées 65, 66 du moyeu 47 les premières portées 63 et 64 des bagues 59 et 60.

L'étanchéité de la chambre 67 est donc ainsi assurée à chaque gonflage ou à chaque ajustement de pression des pneumatiques 6 (figure 5). Le retour en position normale d'ouverture se fait par rappel élastique des membranes dans toutes les configurations.

## Revendications

1. Ensemble (10, 40) de deux organes, moyeu (19, 47) et porte-moyeu (11, 41), pour véhicule équipé d'un système de gonflage centralisé avec une source d'air pressurisé (2), tel que :
- le porte-moyeu (11, 41), fixe relativement au véhicule, comprend un premier conduit d'air (12, 42) avec une première entrée (13, 43) connectable pneumatiquement à la source d'air pressurisé (2) et une première sortie (14, 44) ;
- le moyeu (19, 47), mobile en rotation autour du porte-moyeu (11, 41), comprend un second conduit d'air (20, 49) avec une seconde entrée (21, 51) et une seconde sortie connectable pneumatiquement à la cavité interne d'un pneumatique fixé audit moyeu ;
- les première sortie (14, 44) et seconde entrée (21, 51) débouchent dans une chambre (33, 67) entre les organes fixe et mobile ;
- ladite chambre (33, 67) est reliée à l'air libre par au moins un passage entre une première portée annulaire (31, 65, 66) d'étanchéité lisse solidaire de l'un desdits organes et une seconde portée annulaire (30, 63, 64) d'étanchéité lisse correspondante ménagée sur une bague (28, 59, 60) rigide portée par une membrane annulaire (32, 57, 58) solidaire de l'autre organe et définissant une paroi déformable de ladite chambre (33, 67) de manière à permettre un déplacement sensiblement axial de ladite bague (28, 59, 60) entre deux positions :
a) une position normale d'ouverture du passage d'air dans laquelle les portées d'étanchéité (30, 31, 63, 64, 65, 66) sont espacées l'une de l'autre, et
b)une position de fermeture dans laquelle les première (31, 65, 66) et deuxième (30, 63, 64) portées sont en contact tournant étanche l'une avec l'autre ; et
- ladite chambre (33, 67) comprend un canal annulaire de fuite (35, 69) de faible section droite relativement à la section droite du premier conduit (12, 42) de telle sorte qu'une connexion du premier conduit (12, 42) à la source d'air pressurisé (2) entraîne une surpression dans ladite chambre (33, 67) et la résultante des efforts s'appliquant sur les parois de la membrane annulaire (32, 57, 58) sollicite la bague (28, 59, 60) vers sa position de fermeture.

2. Ensemble (10, 40) selon la revendication 1, dans lequel la section droite du canal annulaire de fuite (35, 69) est inférieure ou égale à 75 % de la section droite du premier conduit (12, 42).

3. Ensemble (10) selon l'une des revendications 1 ou 2, dans lequel le canal annulaire de fuite (35) est disposé axialement entre la bague (28) et celui desdits organes comprenant la première portée d'étanchéité (31).

4. Ensemble (40) selon l'une des revendications 1 ou 2, dans lequel la chambre (67) est reliée à l'air libre par deux passages entre une première portée annulaire (65, 66) d'étanchéité lisse solidaire de l'un desdits organes et une seconde portée annulaire (63, 64) d'étanchéité lisse correspondante ménagée sur deux bagues (59, 60) rigides portées par deux membranes annulaires (57, 58) solidaires de l'autre organe et définissant deux parois déformables de ladite chambre (67) et dans lequel le canal annulaire de fuite (69) est disposé entre les deux bagues (59, 60).

5. Ensemble (40) selon la revendication 4, dans lequel ledit canal annulaire de fuite (69) est disposé axialement entre les deux bagues (59, 60) emboîtées l'une dans l'autre.

6. Ensemble (10, 40) pour véhicule selon l'une des revendications 1 à 5, dans lequel les membranes annulaires souples (32, 57, 58) sont en caoutchouc.

7. Ensemble (10, 40) pour véhicule selon l'une des revendications 1 à 6, dans lequel chaque première portée (30, 63, 64) est constituée par un disque d'étanchéité (29, 61, 62) en carbone.

8. Ensemble (10, 40) pour véhicule selon l'une des revendications 1 à 7, dans lequel les premières (30, 63, 64) et secondes (31, 65, 66) portées ont une orientation radiale.

## Patentansprüche

1. Anordnung (10, 40) aus zwei Organen, Nabe (19, 47) und Nabenträger (11, 41), die durch ein Lager drehbar verbunden sind für ein Fahrzeug, das mit einem zentralen Aufpumpsystem mit einer Druckluftquelle (2) verbunden ist, mit den folgenden Merkmalen:
- der Nabenträger (11, 41), der in Bezug auf das Fahrzeug festliegt, weist eine erste Luftleitung (12, 42) auf, mit einem ersten Einlaß (13, 43), der pneumatisch an die Druckluftquelle (2) anschließbar ist, sowie einem ersten Auslaß (14, 44);
- die Nabe (19, 47), die um den Nabenträger (11, 41) drehbeweglich ist, weist eine zweite Luftleitung (20, 49) mit einem zweiten Einlaß (21, 51) und einem zweiten Auslaß auf, der pneumatisch an den Innenhohlraum eines Reifens anschließbar ist, der auf der genannten Nabe befestigt ist;
- der erste Auslaß (14, 44) und der zweite Einlaß (21, 51) münden in eine Kammer (33, 67) zwischen dem festen und beweglichen Organ;
- die genannte Kammer (33, 67) ist mit der Umgebungsluft durch mindestens einen Kanal zwischen einem ersten, ringförmigen, glatten Dichtungsauflager (31, 65, 66) des einen der genannten Organe und einem zweiten, ringförmigen, glatten, entsprechenden Dichtungsauflager (30, 63, 60) verbunden, das auf einem starren Ring (28, 59, 60) eingebracht ist, der von einer ringförmigen Membran (32, 57, 58) getragen ist, die fest mit dem anderen Or-gan verbunden ist und eine verformbare Wand der genannten Kammer (33, 67) derart bildet, daß eine im wesentlichen axiale Bewegung des genannten Ringes (28, 59, 60) zwischen zwei Lagen gestattet ist:
a) eine normale Öffnungslage des Luftkanals, in der die Dichtungsauflager (30, 31, 63, 64, 65, 66) zueinander beabstandet sind, und
b) eine Schließlage, in der das erste (31, 65, 66) und zweite (30, 63, 64) Auflager in dichter, rotierender Berührung miteinander stehen, und
- die genannte Kammer (33, 67) weist einen ringförmigen Ablaßkanal (35, 69) mit geringem Querschnitt auf, bezogen auf den Querschnitt der ersten Leitung (12, 42), so daß eine Verbindung der ersten Leitung (12, 42) mit der Druckluftquelle (2) einen Überdruck in der genannten Kammer (33, 67) hervorruft und die Resultierende der Kräfte, die auf die Wände der ringförmigen Membran (32, 57, 58) einwirken, den Ring (28, 59, 60) in seine Schließlage drückt.

2. Anordnung (10, 40) nach Anspruch 1, worin der Querschnitt des kreisringförmigen Ablaßkanals (39, 69) kleiner oder gleich 75% der Querschnitts der ersten Leitung (12, 42) ist.

3. Anordnung (10) nacn einem der Ansprüche 1 oder 2, worin der kreisringförmige Ablaßkanal (35) axial zwischen dem Ring (28) und dem der genannten Organe angeordnet ist, das das erste Dichtungsauflager (31) aufweist.

4. Anordnung (40) nach einem der Ansprüche 1 oder 2, worin die Kammer (67) mit der Umgebungsluft durch zwei Kanäle zwischen einem ersten kreisringförmigen, glatten Dichtungsauflager (65, 66), das fest mit einem der genannten Organe verbunden ist, und einem entsprechenden zweiten kreisringförmigen, glatten Dichtungsauflager (63, 64) verbunden ist, das zwei steifen Ringen (59, 60) eingebracht ist, die von zwei ringförmigen Membranen (57, 58) getragen sind, die fest mit dem anderen Organ verbunden sind und zwei verformbare Wände der genannten Kammer (67) bilden, und worin der kreisringförmige Ablaßkanal (69) zwischen den beiden Ringen (59, 60) angeordnet ist.

5. Anordnung (40) nach Anspruch 4, worin der genannte, kreisringförmige Ablaßkanal (69) axial zwischen den beiden Ringen (59, 60) angeordnet ist, die ineinander eingeschachtelt sind.

6. Anordnung (10, 40) für ein Fahrzeug nach einem der Ansprüche 1 bis 5, worin die kreisringförmigen, weichen Membranen (32, 57, 58) aus Gummi bestehen.

7. Anordnung (10, 40) für ein Fahrzeug nach einem der Ansprüche 1 bis 6, worin jedes erste Auflager (30, 63, 64) von einer Dichtungsscheibe (29, 61, 62) aus Kohlenstoff gebildet ist.

8. Anordnung (10, 40) für ein Fahrzeug nach einem der Ansprüche 1 bis 7, worin der ersten (30, 63, 64) und zweiten (31, 65, 66) Auflager eine radiale Ausrichtung haben.

## Claims

1. An assembly (10, 40) consisting of two elements, a hub (19, 47) and hub holder (11, 41), for vehicles equipped with a centralised inflation system and a source of pressurised air (2), such that:
- the hub holder (11, 41), which is fixed relative to the vehicle, comprises a first air duct (12, 42) having a first inlet (13, 43) which can be pneumatically connected to the source of pressurised air (2) and a first outlet (14, 44);
- the hub (19, 47), which is movable in rotation around the hub holder (11, 41), comprises a second air duct (20, 49) having a second inlet (21, 51) and a second outlet which can be connected pneumatically to the inner cavity of a tyre fastened on said hub;
- the first outlet (14, 44) and second inlet (21, 51) open into a chamber (33, 67) between the fixed and movable members;
- said chamber (33, 67) is connected to the open air by at least one passageway between a first smooth annular sealing bearing surface (31, 65, 66) integral with one of said members and a second corresponding smooth sealing annular bearing surface (30, 63, 64) formed on a rigid ring (28, 59, 60) borne by an annular membrane (32, 57, 58) which is integral with the other member and defines a deformable wall of said chamber (33, 67) so as to permit substantially axial displacement of said ring (28, 59, 60) between two positions:
a) a normal open position of the air passageway in which the sealing bearing surfaces (30, 31, 63, 64, 65, 66) are spaced apart from each other, and
b) a closed position in which the first (31, 65, 66) and second (30, 63, 64) bearing surfaces are in airtight rotating contact with each other; and
- said chamber (33, 67) comprises an annular leakage channel (35, 69) of small cross-section as compared with the cross-section of the first duct (12, 42), so that a connection of the first duct (12, 42) to the source of pressurised air (2) results in excess pressure in said chamber (33, 67), and the resultant of the forces acting on the walls of the annular membrane (32, 57, 58) urges the ring (28, 59, 60) towards its closed position.

2. An assembly (10, 40) according to Claim 1, in which the cross-section of the annular leakage channel (35, 69) is less than or equal to 75% of the cross-section of the first duct (12, 42).

3. An assembly (10) according to one of Claims 1 or 2, in which the annular leakage channel (35) is arranged axially between the ring (28) and that one of said members which has the first sealing bearing surface (31).

4. An assembly (40) according to one of Claims 1 or 2, in which the chamber (67) is connected to the open air by two passageways between a first smooth annular sealing bearing surface (65, 66) integral with one of said members and a second corresponding smooth annular sealing bearing surface (63, 64) provided on two rigid rings (59, 60) borne by two annular membranes (57, 58) integral with the other member and defining two deformable walls of said chamber (67) and in which the annular leakage channel (69) is arranged between the two rings (59, 60).

5. An assembly (40) according to Claim 4, in which said annular leakage channel (69) is arranged axially between the two rings (59, 60) which are stacked one inside the other.

6. An assembly (10, 40) for vehicles according to one of Claims 1 to 5, in which the flexible annular membranes (32, 57, 58) are made of rubber.

7. An assembly (10, 40) for vehicles according to one of Claims 1 to 6, in which each first bearing surface (30, 63, 64) is formed by a carbon sealing disc (29, 61, 62).

8. An assembly (10, 40) for vehicles according to one of Claims 1 to 7, in which the first (30, 63, 64) and second (31, 65, 66) bearing surfaces have a radial orientation.
